# EUROPÄISCHE PATENTSCHRIFT

(11) **EP 4 100 572 B1**
(45) Veröffentlichungstag und Bekanntmachung des Hinweises auf die Patenterteilung: **28.02.2024**
(21) Anmeldenummer: 20812272.1
(22) Anmeldetag: 24.11.2020
(51) Int. Cl.: D21D 1/00, D21D 99/00, D21F 11/00

(54) **VERFAHREN ZUR HERSTELLUNG EINER DECKENPAPIERBAHN**
METHODS FOR PRODUCING A LINER WEB
PROCÉDÉS DE FABRICATION D'UNE BANDE DE REVÊTEMENT

(30) Priorität: 04.02.2020 DE 102020102731
(43) Veröffentlichungstag der Anmeldung: 14.12.2022
(73) Patentinhaber: Voith Patent GmbH, 89522 Heidenheim (DE)
(72) Erfinder: FRIEDRICH, Linus, 89522 Heidenheim (DE); HARMS, Marc, 89522 Heidenheim (DE); SCHNELLINGER, Philip, 73457 Essingen (DE)
(86) Internationale Anmeldenummer: PCT/EP2020/083170
(87) Internationale Veröffentlichungsnummer: WO 2021/155970

(56) Entgegenhaltungen:
- EP-A2- 0 936 307
- DE-A1-102008 063 785

## Beschreibung

Die Erfindung betrifft ein Verfahren zur Herstellung einer Deckenpapierbahn aus einer Faserstoffsuspension, die zumindest teilweise aus Altpapier als Faserrohstoff hergestellt wird. Relevanter Stand der Technik ist zum Beispiel aus DE 10 2008 063785 A1 bekannt.

Deckenpapiere werden zur Herstellung von Wellpappen verwendet. Wellpappen können aus drei Lagen bestehen. Als äußere Lagen werden Deckenpapiere verwendet, welche durch ein gewelltes Papier, dem sogenannten Wellenpapier, getrennt sind. Deckenpapiere, welche vollständig aus Altpapier hergestellt sind, werden auch als Testliner bezeichnet. Wellpappen werden zu Verpackungsschachteln und Wellpappenverpackungen verarbeitet. Dafür wird die Wellpappe an mehreren Biegelinien gerillt und gebogen. Die Verpackungen müssen stabil sein und das verpackte Gut vor mechanischen Beschädigungen schützen. Die Deckenpapiere tragen hierzu einen wesentlichen Teil bei.

Aus wirtschaftlichen und ökologischen Gründen wird zur Herstellung von Deckenpapieren der Altpapiereinsatz als Faserrohstoffquelle immer weiter erhöht. Zudem führt eine steigende Recyclingquote zu einer sinkenden Altpapierqualität. Dies wirkt sich besonders bezüglich dem Festigkeitspotential des Altpapiers aus.

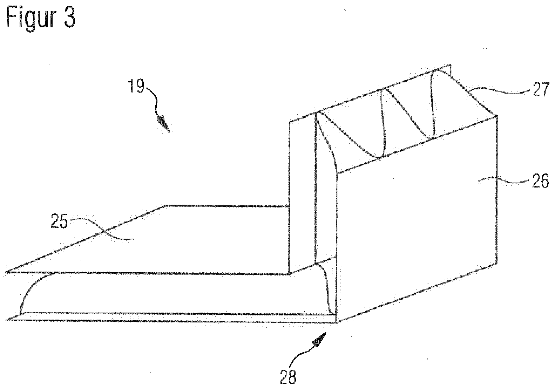

Beim Herstellen der Verpackungsschachteln und Wellpappenverpackungen treten daher zunehmend am äußeren Biegeradius des äußeren Deckenpapieres, wie in Figur 3 schematisch dargestellt, im Bereich der Biegelinie Falzbruch auf, der zu einer geringeren Qualität oder gar zu Unbrauchbarkeit der Verpackungsschachteln und Wellpappenverpackungen führt.

Die Aufgabe der Erfindung ist es daher ein verbessertes Herstellverfahren für Deckenpapiere hinsichtlich Wirtschaftlichkeit, Qualität anzugeben, wodurch die bekannten Probleme in der Weiterverarbeitung reduziert sind. Die Aufgabe wird durch Merkmale des Anspruches 1 gelöst. Es wird ein Verfahren zur Herstellung einer Deckenpapierbahn aus einer

Faserstoffsuspension, die zumindest teilweise aus Altpapier als Faserrohstoff hergestellt wird, vorgeschlagen. Es umfasst folgende Schritte:
a. Zuführen von Altpapier in eine Aufbereitungsanlage zur Erzeugung eines Altpapierstromes;
b. Teilen des Altpapierstromes in einer Fraktionierung in einen Kurzfaserstrom und in einen Langfaserstrom;
c. Zuführen des Kurzfaserstromes in einen Kurzfaserstapelturm und weiter in eine Mischbütte;
d. Zuführen des Langfaserstromes in einen Langfaserstapelturm;
e. Eindicken des Langfaserstromes nach dem Langfaserstapelturm auf eine erste Stoffdichte;
f. Mahlen des Langfaserstromes mit der ersten Stoffdichte durch eine Hochkonsistenzmahlung;
g. Zuführen des Langfaserstromes in die Mischbütte;
h. Führen der Fasersuspension von der Mischbütte durch den konstanten Teil zu einer Papiermaschine zur Bildung einer Deckenpapierbahn in Bahnlaufrichtung;
i. Schrumpfungsbegünstigtes, vorzugsweise quer zur Bahnlaufrichtung profilierbares, Trocknen der Deckenpapierbahn in einer Trockenpartie;
j. Aufrollen der Deckenpapierbahn;

Die Erfinder haben erkannt, dass durch die Hochkonsistenzmahlung selbst und durch die Anordnung dieses Verfahrensschrittes nicht vor dem Langfaserstapelturm, sondern nach dem Langfaserstapelturm, also nach der klassischen Stoffaufbereitung, und dicht vor der Papiermaschine eine deutliche Reduzierung des Falzbruches erreicht werden kann. Die Hochkonsistenzmahlung bewirkt ein äußeres und inneres Fibrillieren der der Einzelfasern des Faserrohstoffes, sowie eine Faserkräuselung und führt somit zu einer höheren Dehnbarkeit der Deckenpapierbahn, insbesondere in Querrichtung, das heißt quer zur Bahnlaufrichtung. Diese Veränderungen des Faserstoffes sind jedoch nicht stabil und verändern ihre positiven Eigenschaften mit der Zeit. Unter Dehnbarkeit soll die Dehnung bis zum Bruch verstanden werden.

Es ist daher vorteilhaft, die Verweilzeit der Faserstoffe zwischen dem Ende des Verfahrensschrittes f) und dem Beginn der Papiermaschine möglichst kurz zu halten. In einer möglichen Ausführung beträgt die Verweilzeit weniger als 45 min, also weniger als 0,75 h, insbesondere weniger als 35 min, vorzugsweise weniger als 25 min. Die Verweilzeit kann beispielsweise durch die Größe von Bütten oder durch den teilweisen Verzicht von Bütten nach der Hochkonsistenzmahlung beeinflusst werden. Je kleiner das Volumen der Rohrleitungen und Bütten zwischen Schritt f) und der Papiermaschine, desto kürzer ist die Verweilzeit.

Ein weiterer Vorteil der Erfindung wird durch ein quer zur Bahnlaufrichtung schrumpfungsbegünstigtes Trocknen in der Papiermaschine erreicht. Die Erfinder haben erkannt, dass dadurch die Dehnungsfähigkeit, das heißt die Dehnung in Querrichtung bis zum Bruch, der Deckenpapierbahn ebenfalls erhöht wird und somit weniger Probleme mit Falzbruch beim Biegen von Wellpappe entsteht.

Bedingt durch den Trocknungsprozess bekannter Papiermaschinen tritt über die Breite der Papierbahn ein ungleicher Verlauf des Querschrumpfes auf. Dieser ist auch unter dem Begriff "Badewanneneffekt" bekannt. Die Bahnränder weisen einen größeren Querschrumpf auf als die Mitte der Papierbahn. Dies führt auch zu einer unterschiedlichen Dehnungsfähigkeit in Querrichtung der Deckenpapierbahn. Schon dieser Unterschied kann bei der Weiterverarbeitung der Deckenpapierbahn zu unterschiedlich starken Problemen durch Falzbruch führen, je nachdem ob das Deckenpapier aus der Mitte oder aus den Rändern der produzierten Deckenpapierbahn stammt.

In einer bevorzugten Ausführung wird das Trocknen in Schritt i) ohne mechanisches Dehnen und/oder mechanisches Schrumpfen, das heißt stauchen, der Deckenpapierbahn quer zur Bahnlaufrichtung der Papiermaschine durchgeführt und die Deckenpapierbahn wird vorzugsweise bei einer Produktionsgeschwindigkeit der Papiermaschine von mehr als 1200 m/min vorzugsweise von mehr als 1300 m/min, insbesondere von mehr als 1400m/min hergestellt. Es sind Vorrichtungen und Verfahren bekannt, welche die Dehnbarkeit der Papierbahn in quer zur Bahnlaufrichtung mechanisches Stauchen erhöhen. Beim dem klassischen, sogenannten "Clupak-Verfahren" wird die Papierbahn durch ein Gummituch in Bahnlaufrichtung mechanisch geschrumpft, das heißt mechanisch gestaucht oder gekreppt, wodurch eine hohe Dehnbarkeit der Papierbahn in Längsrichtung entsteht. Dies wird beispielsweise bei der Herstellung von Sackkraftpapieren genutzt. Dieses Verfahren könnte auch für die mechanische Schrumpfung in Querrichtung angewandt werden. Allerdings ist dieses Verfahren in der Geschwindigkeit begrenzt. Bei einer Anwendung bei der Herstellung von Deckenpapieren könnte die geforderte Produktion kaum erreicht werden. Zusätzlich könnte die Qualität der Deckenpapierbahn beeinträchtigt werden. Der Herstellungsprozess für Deckenpapiere ist daher vorzugsweise frei von einer mechanisch erzeugten Schrumpfung, wie dies beispielsweise nach dem Prinzip des "Clupak-Verfahrens" der Fall wäre.

Die Deckenpapierbahn kann ein Flächengewicht im Bereich von 60 g/m² bis 300 g/m², insbesondere im Bereich von 70 g/m² bis 160 g/m² aufweisen.

Vorteilhafterweise weist das Altpapier einen Aschegehalt zwischen 10 bis 25% auf und hat vorzugsweise einen Mahlgrad zwischen 25 SR und 50°SR und besitzt vorzugsweise ein Wasserrückhaltevermögen zwischen 95% und 130%.

In einer möglichen praktischen Ausgestaltung ist die erste Stoffdichte größer als 10%, insbesondere größer als 15%, vorzugsweise größer als 20%, ist. Dadurch wirkt sich die Hochkonsistenzmahlung besonders vorteilhaft auf die Reduzierung des Risikos des Falzbruches aus.

Ferner ist es vorteilhaft, wenn bei der Hochkonsistenzmahlung nach Schritt f) eine Energie im Bereich zwischen 80 kWh/t_{Langfaser} bis 350 kWh/t_{Langfaser}, vorzugsweise von mehr als 150 kWh/t_{langfaser} eingesetzt wird.

In einer möglichen Weiterbildung wird anschließend an Schritt f) 100% oder zumindest ein Teil des Langfaserstromes verdünnt und vorzugsweise gestapelt.

In einem möglichen praktischen Fall wird der Langfaserstrom auf eine Stoffdichte von vorzugsweise weniger als 5% verdünnt und anschließend einer Niedrigkonsistenzmahlung unterzogen.

In einer praktischen Weiterentwicklung wird in Schritt h) die Deckenpapierbahn auf mindestens einem Sieb gebildet und das Sieb mittels einer Schüttelvorrichtung quer zur Bahnlaufrichtung hin und her geschüttelt wird. Dadurch lässt sich unter anderem auch der "Badewanneneffekt" reduzieren. Die Schrumpfungsdifferenz zwischen den Papierbahnrändern und der Bahnmitte wird geringer und somit die Qualität der Deckenpapierbahn gleichmäßiger.

Die Trockenpartie kann eine Vortrockenpartie und eine Nachtrockenpartie aufweisen und die Deckenpapierbahn dazwischen einseitig oder zweiseitig mit vorzugsweise Stärke, geleimt wird. Die Leimung kann mit einer Leimpresse oder mit einer Filmpresse durchgeführt werden. Dadurch wird das Festigkeitspotential der altpapierhaltigen Faserstoffsuspension und dadurch auch die Produktionsleistung der Papiermaschine erhöht.

In einer vorteilhaften Weiterentwicklung wird unmittelbar nach der Leimung die Deckenpapierbahn berührungslos umgelenkt und/oder durch eine Prallströmungstrocknung, vorzugsweise im Zusammenwirken mit einem unbefilzten Trockenzylinder, in der Nachtrockenpartie getrocknet. Vorzugsweise ist die Prallströmungstrocknung quer zur Bahnlaufrichtung profilierbar.

Die berührungslose Umlenkung kann durch Schaffung eines Luftpolsters zwischen der Papierbahn und Blaselementen zum Ausblasen von vorzugsweise heißer Blasluft, erfolgen. Das schrumpfungsbegünstigte Trocknen durch die berührungslose Umlenkung, als auch durch eine Prallströmungstrockung begünstigen ein Schrumpfen der Faserstoffbahn und somit die Reduzierung des Risikos des Falzbruches. Die Trocknung auf einem unbefilzten Trockenzylinder vergrößert diesen Vorteil noch, da durch das Fehlen des Trockenfilzes, oder Trockensiebes, die Papierbahn, das heißt ohne Schrumpfungsbehinderung, getrocknet wird.

In einer bevorzugten Weiterbildung umfasst die Trockenpartie einreihige und zweireihige Trockengruppen und der Anteil der Anzahl Trockenzylinder der zweireihigen Trockengruppen an der Gesamtzahl der Trockenzylinder beträgt 10% bis 70%, vorzugsweise 30% bis 80%, insbesondere >50%. In zweireihigen Trockengruppen wird die Deckenpapierbahn ebenfalls schrumpfungsbegünstigt getrocknet. Die Anzahl Trockenzylinder der zweireihigen Trockengruppen an der Gesamtzahl der Trockenzylinder sollte daher möglichst groß sein.

Die Faserstoffsuspension kann aus mehr als 50%, insbesondere aus mehr als 70%, vorzugsweise aus mehr als 80%, besonders vorzugsweise aus mehr als 90% Altpapier als Faserrohstoff hergestellt sein.

In bestimmten Fällen ist es möglich, wenn die Faserstoffsuspension aus Altpapier und Frischfaserzellstoff als Faserrohstoff hergestellt wird. Dies kann zur Steigerung der Festigkeit der Deckenpapierbahn und der Produktionsleistung vorteilhaft sein. Wobei vorzugsweise die Frischfasern aus der Gruppe Holzstoff, Zellstoff, Fasern von Einjahrespflanzen ausgewählt sind.

In einem bevorzugten Fall wird die Faserstoffsuspension aus 100% Altpapier als Faserrohstoff hergestellt.

Die Leimung der Deckenpapierbahn wird bevorzugt bei einem Trockengehalt zwischen 60% und 80% durchgeführt.

In einem möglichen praktischen Fall wird die Leimung so durchgeführt, dass der Feuchtegehalt der Deckenpapierbahn nach der Leimung zwischen 25% und 50% liegt. Dies führt insbesondere in Kombination mit einer schrumpfungsbegünstigten Trocknung zu einer geringeren Falzbruchbildung.

Dieser vorteilhafte Effekt kann auch dadurch erreicht und verstärkt werden, wenn die Nachtrockenpartie vor den zweireihigen Trockengruppen eine letzte einreihige Trockengruppe aufweist und der letzten Trockensiebsaugwalze ein vorzugsweise in Querrichtung profilierbarer Düsenfeuchter zur Befeuchtung der Deckenpapierbahn zugeordnet ist. Nach dieser Befeuchtung der Deckenpapierbahn wird diese in den nachfolgenden zweireihigen Trockengruppen schrumpfungsbegünstigt getrocknet und somit die Falzbruchbildung reduziert.

Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Weitere Merkmale und Vorteile der Erfindung ergeben sich aus der nachfolgenden Beschreibung bevorzugter Ausführungsbeispiele unter Bezugnahme auf die Zeichnungen.

### Es zeigen

- Figur 1: eine Ausführungsform eines erfindungsgemäßen Verfahrens als Verfahrensschema;
- Figur 2: eine Ausführungsform eines Ausschnittes der Trockenpartie der Papiermaschine in vereinfachter Darstellung;
- Figur 3: eine gebogene Wellpappe in vereinfachter Darstellung;

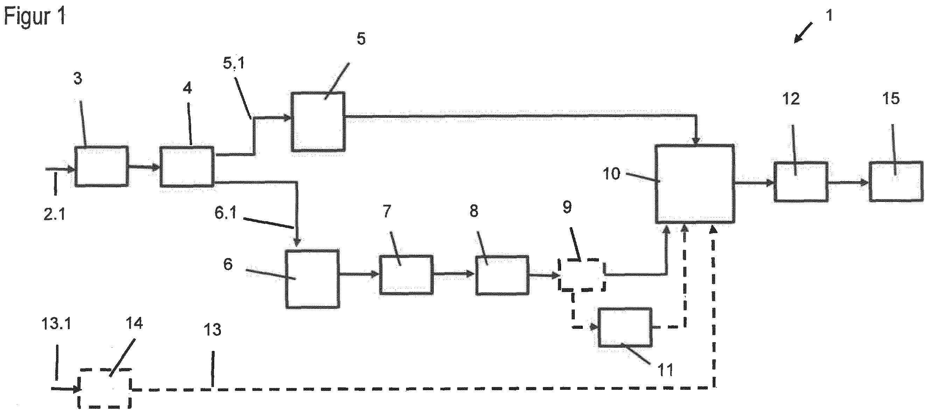

Figur 1 zeigt eine Ausführungsform eines erfindungsgemäßen Verfahrens als Verfahrensschema. Die Deckenpapierbahn wird in einer Herstellungsanlage 1 aus einer Faserstoffsuspension, die zumindest teilweise aus Altpapier 2.1 als Faserrohstoff hergestellt. In diesem Beispiel stammt der Faserrohstoff zu 100% aus Altpapier 2.1. Optional können jedoch auch Frischfasern 13.1 zugemischt werden. Dabei entsteht der Frischfaserstrom 13 aus in einer Frischfaseraufbereitung 14 aufbereiteten Frischfasern 13.1. Der Frischfaserstrom 13 wird der Mischbütte 10 zugeführt. Das Altpapier wird beispielsweise in Altpapierballen 2.1 angeliefert und in einer Aufbereitungsanlage 3 zu einem Altpapierstrom 2 aufbereitet. Dieser Schritt kann bekanntermaßen beispielsweise eine Entdrahtung, Auflösung, Reinigung umfassen. Der Altpapierstrom 2 wird nun in einer Fraktionierung 4 in einen Kurzfaserstrom 5.1 und in einen Langfaserstrom 6.1 aufgeteilt. Anschließend wird der Kurzfaserstrom 5.1 in einem Kurzfaserstapelturm 5 und der Langfaserstrom 6.1 in einem Langfaserstapelturm 6 gestapelt. Die Stapeltürme 5, 6 stellen das Ende einer klassischen Stoffaufbereitungsanlage für die Herstellung von Deckenpapieren dar. Der Kurzfaserstrom 5.1 wird vom Kurzfaserstapelturm 5 weiter in die Mischbütte 10 geleitet. Der Langfaserstrom 6.1 wird hingegen nach dem Langfaserstapelturm 6 auf eine erste Stoffdichte von größer als 10%, insbesondere von größer als 15%, vorzugsweise von größer als 20% eingedickt und einer Hochkonsistenzmahlung 8 zugeführt. Bei der Hochkonsistenzmahlung wird eine Energie im Bereich zwischen 80 kWh/t bis 350 kWh/t, eingesetzt. Anschließend kann der Langfaserstrom 6.1 in einem Stapel- und/oder Verdünnungsschritt 9 einer Stapelbütte zugeführt und optional wieder verdünnt werden. Bevor die Zuführung in die Mischbütte 10 und ein Vermischen mit dem Kurzfaserstrom 5 erfolgt. In einem weiteren optionalen Schritt kann der Langfaserstrom 6.1 nach der Hochkonsistenzmahlung 8 auf eine zweite Stoffdichte von weniger als 5% verdünnt und anschließend in einer Niedrigkonsistenzmahlung 11 gemahlen werden bevor er in die Mischbütte 10 geleitet wird. Durch diesen zweiten Mahlschritt wird dem Auftreten von Falzbrüchen noch weiter entgegengewirkt. Die Fasersuspension in der Mischbütte 10 wird über den sogenannten Konstanten Teil 12 der Papiermaschine 15 zur Bildung einer Deckenpapierbahn zugeführt. Die Deckenpapierbahn kann ein Flächengewicht im Bereich von 60 g/m² bis 300 g/m² aufweisen.

Damit der positive Effekt der Hochkonsistenzmahlung 8 auf das Auftreten von Falzbruch erhalten bleibt, ist vorteilhaft, die Verweilzeit der Faserstoffe zwischen dem Ende der Hochkonsistenzmahlung 8 und dem Beginn der Papiermaschine 15 möglichst kurz zu halten. In einer möglichen Ausführung beträgt die Verweilzeit weniger als 45 Minuten, insbesondere weniger als 35 Minuten, vorzugsweise weniger als 25 Minuten. Die Verweilzeit kann beispielsweise durch die Größe von Bütten oder Rohrleitungen durch den teilweisen Verzicht von Bütten nach der Hochkonsistenzmahlung 8 beeinflusst werden. Je kleiner das Volumen der Rohrleitungen und Bütten zwischen der Hochkonsistenzmahlung 8 und der Papiermaschine gewählt wird, desto kürzer ist die Verweilzeit.

Die Deckenpapierbahn wird auf mindestens einem Sieb im Formierbereich der Papiermaschine 15 gebildet und das Sieb mittels einer Schüttelvorrichtung quer zur Bahnlaufrichtung 29 hin und her geschüttelt. Die Schrumpfungsdifferenz zwischen den Papierbahnrändern und der Bahnmitte wird dadurch geringer und somit die Qualität der Deckenpapierbahn gleichmäßiger. Der Formierbereich kann ein Langsieb oder einen Hybridformer oder einen Gapformer umfassen. Durch eine kurze Verweilzeit der Fasern zwischen der Hochkonsistenzmahlung 8 und dem Fixieren der Fasern im Formierbereich kann der durch die Hochkonsistenzmahlung 8 erreichte Zustand der Fasern zur Reduzierung des Auftretens von Falzbruch, eingefroren und erhalten werden. Nach dem Formierbereich wird die Deckenpapierbahn in der Pressenpartie und der nachfolgenden Trockenpartie entwässert und getrocknet. Die Trocknung erfolgt durch ein schrumpfungsbegünstigtes Trocknen der Deckenpapierbahn in einer Trockenpartie. Der Trocknungsschritt kann durch ein profilierbares Trocknen quer zur Bahnlaufrichtung durchgeführt werden. Beispielsweise kann zonenweise über die Breite unterschiedlich getrocknet werden. Dadurch lassen sich negative Auswirkungen von Eigenschaftsunterschieden der Deckenpapierbahn über die Breite bei der Weiterverarbeitung der Deckenpapierbahn reduzieren. Die Trockenpartie 16 kann eine Vortrockenpartie 17 und eine Nachtrockenpartie 18 aufweisen und die Deckenpapierbahn kann dazwischen einseitig oder zweiseitig mit vorzugsweise Stärke, geleimt sein. Die Leimung 19 kann mit einer Leimpresse oder mit einer Filmpresse durchgeführt werden. Dadurch werden das Festigkeitspotential der altpapierhaltigen Faserstoffsuspension und dadurch auch die Produktionsleistung der Papiermaschine erhöht. Im Anschluss an die Trockenpartie 16 erfolgt die Aufrollung der Papierbahn.

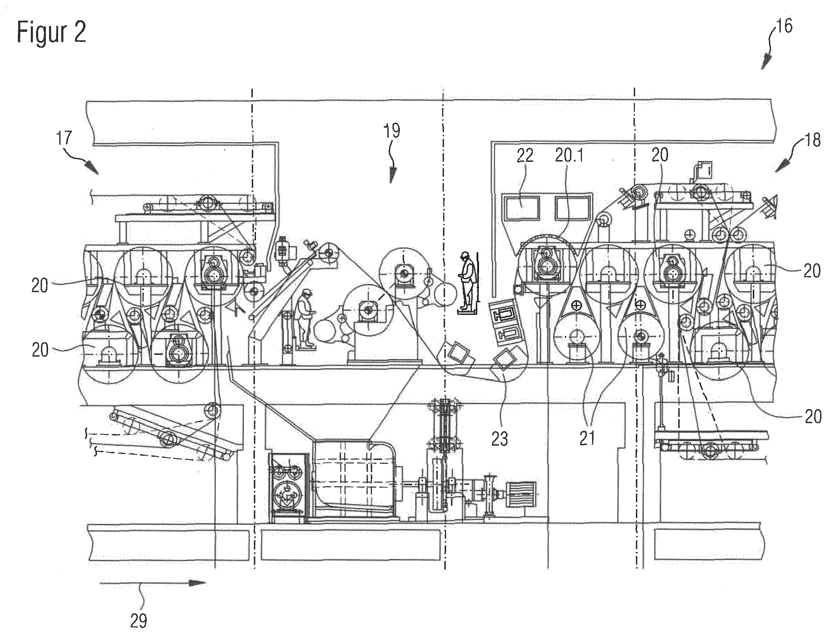

Die Figur 2 zeigt eine Ausführungsform eines Ausschnittes der Trockenpartie der Papiermaschine in vereinfachter Darstellung. Die Trockenpartie 16 umfasst eine Vortrockenpartie 17 und eine und eine in Bahnlaufrichtung 29 nachgeordnete Nachtrockenpartie 18. In diesem Ausschnitt sind das Ende der Vortrockenpartie 17 und der Beginn der Nachtrockenpartie 18 dargestellt. Die Deckenpapierbahn durchläuft die letzte Trockengruppe der Vortrockenpartie 17, welche als zweireihige Trockengruppe mit oben- und untenliegenden Trockenzylindern 20 ausgeführt ist. Die Papierbahn wird, im Gegensatz zu einreihigen Trockengruppen, schrumpfungsbegünstigt getrocknet. Daran anschließend erfolgt die ein- und/oder zweiseitige Leimung 19 der Deckenpapierbahn mit Stärke bei einem Trockengehalt zwischen 60% und 80%. Durch diesen Prozessschritt wird die Deckenpapierbahn auf einen Feuchtegehalt von 25% bis 50% befeuchtet. Die Leimung wird mit einer Filmpresse ausgeführt.

Unmittelbar nach der Leimung 19 erfolgt eine berührungslose Umlenkung 23 der Deckenpapierbahn und/oder eine Prallströmungstrocknung 22 im Zusammenwirken mit einem unbefilzten Trockenzylinder 20.1. Diese Anordnung ermöglicht ebenfalls ein schrumpfungsbegünstigtes Trocknen der Deckenpapierbahn, da kein Trockensieb oder Trockenfilz die Schrumpfung behindert. Anschließend wird die Papierbahn in einer einreihigen Trockengruppe mit untenliegenden Trockensiebsaugwalzen 21 mit sich anschließenden weiteren zweireihigen Trockengruppen getrocknet. Die Prallströmungstrocknung kann quer zur Bahnlaufrichtung 29 profilierbar sein. Die berührungslose Umlenkung 23 kann durch Schaffung eines Luftpolsters zwischen der Papierbahn und Blaselementen zum Ausblasen von vorzugsweise heißer Blasluft, erfolgen. Die berührungslose Umlenkung 23, als auch die Prallströmungstrockung 22 begünstigen ein Schrumpfen der Faserstoffbahn und somit die Reduzierung des Risikos des Falzbruches. Die Trocknung auf einem unbefilzten Trockenzylinder vergrößert diesen Vorteil noch, da durch das Fehlen des Trockenfilzes, oder Trockensiebes, die Papierbahn, das heißt ohne Schrumpfungsbehinderung, getrocknet wird. Die Trockenpartie umfasst einreihige und zweireihige Trockengruppen und der Anteil der Anzahl Trockenzylinder der zweireihigen Trockengruppen an der Gesamtzahl der Trockenzylinder beträgt 10% bis 70%, vorzugsweise 30% bis 80%, insbesondere >50%. In zweireihigen Trockengruppen wird die Deckenpapierbahn ebenfalls schrumpfungsbegünstigt getrocknet. Die Anzahl Trockenzylinder der zweireihigen Trockengruppen an der Gesamtzahl der Trockenzylinder sollte daher möglichst groß sein.

Zur Veranschaulichen der der Erfindung zugrundeliegenden Problematik zeigt die Figur 3 einen Ausschnitt einer bereits für die Herstellung einer Wellpappenverpackung gebogene Wellpappe 24. Die Wellpappe 24 umfasst in diesem Beispiel ein oberes Deckenpapier 25, ein unteres Deckenpapier 26 und dazwischen ein Wellenpapier 27, das mit den beiden Deckenpapieren 25, 26 verklebt ist. Durch das Biegen kann beispielsweise im Biegebereich 28 das untere Deckenpapier 26 zumindest stellenweise reißen. Dies wird als Falzbruch bezeichnet. Die Gefahr des Falzbruches ist besonders bei einem Rohstoffeinsatz von 100% Altpapier gegeben. Je schlechter die Qualität des Altpapiers, desto größer ist die Gefahr des Falzbruches des Deckenpapieres, das bei 100% Altpapiereinsatz auch Testliner genannt wird.

Die verschiedenen, in den Ausführungsbeispielen beschriebenen Merkmale sind nicht auf die jeweiligen Ausführungsbeispiele beschränkt, sondern können ausdrücklich auch miteinander kombiniert oder ausgetauscht werden, sofern sich keine Widersprüche ergeben. Ebenso schränken die Ausführungsbeispiele den Umfang der Erfindung nicht ein. Eine mögliche Kombination oder Teilkombination der beschriebenen Merkmale der Erfindung sollen im Umfang der Erfindung gesehen werden. Korrespondierende Elemente der Ausführungsbeispiele in den Figuren sind mit gleichen Bezugszeichen versehen. Die Funktionen solcher Elemente in den einzelnen Figuren entsprechen einander, sofern nichts anderes beschrieben ist und es nicht zu Widersprüchen führt. Auf eine wiederholte Beschreibung wird daher verzichtet.

### Bezugszeichenliste

- 1: Herstellungsanlage
- 2: Altpapierstrom
- 2.1: Altpapierballen
- 3: Aufbereitungsanlage
- 4: Fraktionierung
- 5: Kurzfaserstapelturm
- 5.1: Kurzfaserstrom
- 6: Langfaserstapelturm
- 6.1: Langfaserstrom
- 7: Eindickung
- 8: Hochkonsistenzmahlung
- 9: Stapeln, Verdünnen
- 10: Mischbütte
- 11: Niedrigkonsistenzmahlung
- 12: Konstanter Teil
- 13: Frischfaserstrom
- 13.1: Frischfasern
- 14: Frischfaseraufbereitung
- 15: Papiermaschine
- 16: Trockenpartie
- 17: Vortrockenpartie
- 18: Nachtrockenpartie
- 19: Leimung
- 20: Trockenzylinder
- 20.1: Unbefilzter Trockenzylinder
- 21: Trockensiebsaugwalzen
- 22: Prallströmungstrocknung
- 23: Berührungslose Umlenkung
- 24: Wellpappe
- 25: Oberes Deckenpapier
- 26: Unteres Deckenpapier
- 27: Wellenpapier
- 28: Biegebereich
- 29: Bahnlaufrichtung

## Patentansprüche

1. Verfahren zur Herstellung einer Deckenpapierbahn aus einer Faserstoffsuspension, die zumindest teilweise aus Altpapier als Faserrohstoff hergestellt wird, umfassend folgende Schritte:
a. Zuführen von Altpapier in eine Aufbereitungsanlage (3) zur Erzeugung eines Altpapierstromes (2):
b. Teilen des Altpapierstromes (2) in einer Fraktionierung in einen Kurzfaserstrom und in einen Langfaserstrom;
c. Zuführen des Kurzfaserstromes in einen Kurzfaserstapelturm und weiter in eine Mischbütte;
d. Zuführen des Langfaserstromes in einen Langfaserstapelturm;
e. Eindicken des Langfaserstromes nach dem Langfaserstapelturm auf eine erste Stoffdichte;
f. Mahlen des Langfaserstromes mit der ersten Stoffdichte durch eine Hochkonsistenzmahlung;
g. Zuführen des Langfaserstromes in die Mischbütte;
h. Führen der Fasersuspension von der Mischbütte durch den konstanten Teil zu einer Papiermaschine zur Bildung einer Deckenpapierbahn in Bahnlaufrichtung;
i. Schrumpfungsbegünstigtes, vorzugsweise quer zur Bahnlaufrichtung profilierbares, Trocknen der Deckenpapierbahn in einer Trockenpartie;
j. Aufrollen der Deckenpapierbahn;

2. Verfahren nach Anspruch 1, wobei das Trocknen in Schritt i) ohne mechanisches Dehnen und/oder Schrumpfen der Deckenpapierbahn quer zur Bahnlaufrichtung der Papiermaschine durchgeführt wird und vorzugsweise die Deckenpapierbahn bei einer Produktionsgeschwindigkeit der Papiermaschine von mehr als 1200 m/min vorzugsweise von mehr als 1300 m/min, insbesondere von mehr als 1400m/min hergestellt wird.

3. Verfahren nach Anspruch 1 oder 2, wobei die Deckenpapierbahn ein Flächengewicht im Bereich von 60 g/m² bis 300 g/m², insbesondere im Bereich von 70 g/m² bis 160 g/m² aufweist.

4. Verfahren nach einem der vorhergehenden Ansprüche, wobei das Altpapier einen Aschegehalt zwischen 10 bis 25% aufweist und vorzugsweise einen Mahlgrad zwischen 25 SR und 50°SR hat und vorzugsweise ein Wasserrückhaltevermögen zwischen 95% und 130% besitzt.

5. Verfahren nach einem der vorhergehenden Ansprüche, wobei die erste Stoffdichte größer als 10%, insbesondere größer als 15%, vorzugsweise größer als 20%, ist.

6. Verfahren nach einem der vorhergehenden Ansprüche, wobei bei der Hochkonsistenzmahlung nach Schritt f) eine Energie im Bereich zwischen 80 kWh/t_{langfaser} bis 350 kWh/t_{langfaser}, vorzugsweise von mehr als 150 kWh/t_{langfaser} eingesetzt wird.

7. Verfahren nach einem der vorhergehenden Ansprüche, wobei anschließend an Schritt f) 100% oder zumindest ein Teil des Langfaserstromes verdünnt und vorzugsweise gestapelt wird.

8. Verfahren nach Anspruch 7, wobei der Langfaserstrom auf eine Stoffdichte von vorzugsweise weniger als 5% verdünnt und anschließend einer Niedrigkonsistenzmahlung unterzogen wird.

9. Verfahren nach einem der vorhergehenden Ansprüche, wobei in Schritt h) die Deckenpapierbahn auf mindestens einem Sieb gebildet wird und das Sieb mittels einer Schüttelvorrichtung quer zur Bahnlaufrichtung hin und her geschüttelt wird.

10. Verfahren nach einem der vorhergehenden Ansprüche, wobei die Trockenpartie eine Vortrockenpartie und eine Nachtrockenpartie aufweist und dazwischen die Deckenpapierbahn einseitig oder zweiseitig mit vorzugsweise Stärke, geleimt wird.

11. Verfahren nach Anspruch 10, wobei unmittelbar nach der Leimung die Deckenpapierbahn berührungslos umgelenkt und/oder durch eine Prallströmungstrocknung, vorzugsweise in Zusammenwirken mit einem unbefilzten Trockenzylinder, in der Nachtrockenpartie getrocknet wird und dass vorzugsweise die Prallströmungstrocknung quer zur Bahnlaufrichtung proilierbar ist.

12. Verfahren nach einem der vorhergehenden Ansprüche, wobei die Trockenpartie einreihige und zweireihige Trockengruppen umfasst und der Anteil der Anzahl Trockenzylinder der zweireihigen Trockengruppen an der Gesamtzahl der Trockenzylinder 10% bis 70%, vorzugsweise 30% bis 80%, insbesondere >50% beträgt.

13. Verfahren nach einem der Ansprüche 1 bis 12, wobei die Faserstoffsuspension aus mehr als 50%, insbesondere mehr als 70%, vorzugsweise mehr als 80%, besonders vorzugsweise aus mehr als 90% Altpapier als Faserrohstoff hergestellt wird.

14. Verfahren nach einem der vorhergehenden Ansprüche, wobei die Faserstoffsuspension aus Altpapier und Frischfaserzellstoff als Faserrohstoff hergestellt wird, wobei vorzugsweise die Frischfasern aus der Gruppe Holzstoff, Zellstoff, Fasern von Einjahrespflanzen ausgewählt sind.

15. Verfahren nach einem der Ansprüche 1 bis 12, wobei die Faserstoffsuspension aus 100% Altpapier als Faserrohstoff hergestellt wird.

## Claims

1. Method for producing a liner web from a fibrous material suspension, which is at least partially produced from waste paper as fibrous raw material, comprising the following steps:
a. feeding waste paper into a processing plant (3) for generation of a waste paper stream (2);
b. dividing the waste paper stream (2) into a short-fibre stream and into a long-fibre stream in a fractionation operation;
c. feeding the short-fibre stream into a short-fibre stacking tower and further into a mixing chest;
d. feeding the long-fibre stream into a long-fibre stacking tower;
e. thickening the long-fibre stream to a first consistency downstream of the long-fibre stacking tower;
f. refining the long-fibre stream having the first consistency by means of a high consistency refining operation;
g. feeding the long-fibre stream into the mixing chest;
h. guiding the fibrous suspension from the mixing chest through the approach flow section to a paper machine for formation of a liner web in a web running direction;
i. drying the liner web in a drying section, said drying promoting shrinkage and preferably being able to be profiled transversely with respect to the web running direction;
j. rolling up the liner web.

2. Method according to Claim 1,
wherein the drying in step i) is carried out without mechanical stretching and/or shrinking of the liner web transversely with respect to the web running direction of the paper machine, and the liner web is preferably produced at a production speed of the paper machine of more than 1200 m/min, preferably of more than 1300 m/min, in particular of more than 1400 m/min.

3. Method according to Claim 1 or 2,
wherein the liner web has a grammage in the range of 60 g/m² to 300 g/m², in particular in the range of 70 g/m² to 160 g/m².

4. Method according to one of the preceding claims, wherein the waste paper has an ash content of between 10 and 25% and preferably has a freeness of between 25°SR and 50°SR and preferably has a water retention capacity of between 95% and 130%.

5. Method according to one of the preceding claims, wherein the first consistency is greater than 10%, in particular greater than 15%, preferably greater than 20%.

6. Method according to one of the preceding claims, wherein, during the high consistency refining operation according to step f), an energy in the range of between 80 kWh/t_{long fibre} and 350 kWh/t_{long fibre}, preferably of more than 150 kWh/t_{long fibre}, is used.

7. Method according to one of the preceding claims, wherein, subsequent to step f), 100% or at least a portion of the long-fibre stream is diluted and preferably stacked.

8. Method according to Claim 7,
wherein the long-fibre stream is diluted to a consistency of preferably less than 5% and is subsequently subjected to a low consistency refining operation.

9. Method according to one of the preceding claims, wherein, in step h), the liner web is formed on at least one screen and the screen is shaken back and forth transversely with respect to the web running direction by means of a shaking device.

10. Method according to one of the preceding claims, wherein the drying section comprises a pre-drying section and an after-drying section and the liner web is sized on one side or two sides with, preferably, starch between said sections.

11. Method according to Claim 10,
wherein, immediately after the sizing, the liner web is contactlessly deflected and/or dried by an impingement flow drying operation, preferably in cooperation with an unfelted cylinder, in the after-drying section, and in that preferably the impingement flow drying operation is able to be profiled transversely with respect to the web running direction.

12. Method according to one of the preceding claims, wherein the drying section comprises single-row or double-row drying groups and the proportion of the number of drying cylinders of the double-row drying groups in relation to the total number of drying cylinders is 10% to 70%, preferably 30% to 80%, in particular > 50%.

13. Method according to one of Claims 1 to 12,
wherein the fibrous material suspension is produced from more than 50%, in particular more than 70%, preferably more than 80%, particularly preferably from more than 90%, waste paper as fibrous raw material.

14. Method according to one of the preceding claims, wherein the fibrous material suspension is produced from waste paper and fresh fibre pulp as fibrous raw material, wherein preferably the fresh fibres are selected from the group of mechanical pulp, chemical pulp, fibres from annual plants.

15. Method according to one of Claims 1 to 12,
wherein the fibrous material suspension is produced from 100% waste paper as fibrous raw material.

## Revendications

1. Procédé de préparation d'une bande de papier de recouvrement à partir d'une suspension de matière fibreuse, qui est préparée au moins partiellement à partir de vieux papiers en tant que matière première fibreuse, comprenant les étapes suivantes :
a. l'amenée de vieux papiers dans une installation de traitement (3) pour produire un courant de vieux papiers (2) ;
b. la division du courant de vieux papiers (2) dans un fractionnement en un courant de fibres courtes et un courant de fibres longues ;
c. l'amenée du courant de fibres courtes dans une tour d'empilage de fibres courtes et ensuite dans une cuve de mélange ;
d. l'amenée du courant de fibres longues dans une tour d'empilage de fibres longues ;
e. l'épaississement du courant de fibres longues après la tour d'empilage de fibres longues jusqu'à une première densité de matière ;
f. le broyage du courant de fibres longues à la première densité de matière par un broyage à haute consistance ;
g. l'amenée du courant de fibres longues dans la cuve de mélange ;
h. l'acheminement de la suspension de fibres de la cuve de mélange à travers la partie constante vers une machine à papier pour former une bande de papier de recouvrement dans la direction de défilement de la bande ;
i. le séchage de la bande de papier de recouvrement dans une section de séchage, favorisant le rétrécissement, de préférence profilable transversalement à la direction de défilement de la bande ;
j. l'enroulement de la bande de papier de recouvrement.

2. Procédé selon la revendication 1, dans lequel le séchage à l'étape i) est effectué sans étirement et/ou rétrécissement mécanique de la bande de papier de recouvrement transversalement à la direction de défilement de la bande de la machine à papier, et de préférence la bande de papier de recouvrement est préparée à une vitesse de production de la machine à papier de plus de 1 200 m/min, de préférence de plus de 1 300 m/min, notamment de plus de 1 400 m/min.

3. Procédé selon la revendication 1 ou 2, dans lequel la bande de papier de recouvrement présente un grammage dans la plage allant de 60 g/m² à 300 g/m², notamment dans la plage allant de 70 g/m² à 160 g/m².

4. Procédé selon l'une quelconque des revendications précédentes, dans lequel les vieux papiers présentent une teneur en cendres comprise entre 10 et 25 % et ont de préférence un degré de broyage compris entre 25 SR et 50°SR et possèdent de préférence une capacité de rétention d'eau comprise entre 95 % et 130 %.

5. Procédé selon l'une quelconque des revendications précédentes, dans lequel la première densité de matière est supérieure à 10 %, notamment supérieure à 15 %, de préférence supérieure à 20 %.

6. Procédé selon l'une quelconque des revendications précédentes, dans lequel, lors du broyage à haute consistance selon l'étape f), une énergie dans la plage allant de 80 kWh/t_{fibre longue} à 350 kWh/t_{fibre longue}, de préférence de plus de 150 kWh/t_{fibre longue}, est utilisée.

7. Procédé selon l'une quelconque des revendications précédentes, dans lequel, suite à l'étape f), 100 % ou au moins une partie du courant de fibres longues est diluée et de préférence empilée.

8. Procédé selon la revendication 7, dans lequel le courant de fibres longues est dilué jusqu'à une densité de matière de préférence inférieure à 5 % et est ensuite soumis à un broyage à faible consistance.

9. Procédé selon l'une quelconque des revendications précédentes, dans lequel, à l'étape h), la bande de papier de recouvrement est formée sur au moins une toile et la toile est secouée en va-et-vient transversalement à la direction de défilement de la bande au moyen d'un dispositif de secouage.

10. Procédé selon l'une quelconque des revendications précédentes, dans lequel la section de séchage présente une section de pré-séchage et une section de post-séchage, et la bande de papier de recouvrement est encollée entre celles-ci sur un ou deux côtés, de préférence avec de l'amidon.

11. Procédé selon la revendication 10, dans lequel, immédiatement après l'encollage, la bande de papier de recouvrement est déviée sans contact et/ou séchée par un séchage par impact, de préférence en coopération avec un cylindre de séchage non feutré, dans la section de post-séchage, et en ce que, de préférence, le séchage par impact peut être profilé transversalement à la direction de défilement de la bande.

12. Procédé selon l'une quelconque des revendications précédentes, dans lequel la section de séchage comprend des groupes de séchage à une rangée et à deux rangées et la proportion du nombre de cylindres de séchage des groupes de séchage à deux rangées par rapport au nombre total de cylindres de séchage est de 10 % à 70 %, de préférence de 30 % à 80 %, notamment > 50 %.

13. Procédé selon l'une quelconque des revendications 1 à 12, dans lequel la suspension de matière fibreuse est préparée à partir de plus de 50 %, notamment de plus de 70 %, de préférence de plus de 80 %, de manière particulièrement préférée de plus de 90 % de vieux papiers en tant que matière première fibreuse.

14. Procédé selon l'une quelconque des revendications précédentes, dans lequel la suspension de matière fibreuse est préparée à partir de vieux papiers et de pâte cellulosique de fibres fraîches en tant que matière première fibreuse, les fibres fraîches étant de préférence choisies dans le groupe de la pâte de bois, de la pâte cellulosique, des fibres de plantes annuelles.

15. Procédé selon l'une quelconque des revendications précédentes, dans lequel la suspension de matière fibreuse est préparée à partir de 100 % de vieux papiers en tant que matière première fibreuse.
